# EUROPÄISCHE PATENTSCHRIFT

(11) **EP 3 364 829 B1**
(45) Veröffentlichungstag und Bekanntmachung des Hinweises auf die Patenterteilung: **04.12.2019**
(21) Anmeldenummer: 16778337.2
(22) Anmeldetag: 05.10.2016
(51) Int. Cl.: A47J 31/44, A47J 31/36, A47J 31/40

(54) **GETRÄNKEZUBEREITUNGSMASCHINE**
MACHINE FOR MAKING BEVERAGES
MACHINE DE PRÉPARATION DE BOISSONS

(30) Priorität: 20.10.2015 EP 15190615
(43) Veröffentlichungstag der Anmeldung: 29.08.2018
(73) Patentinhaber: Tchibo (Schweiz) AG, 8304 Wallisellen (CH)
(72) Erfinder: KREWINKEL, Thomas, 58840 Plettenberg (DE)
(74) Vertreter: Frei Patent Attorneys
(86) Internationale Anmeldenummer: PCT/EP2016/073802
(87) Internationale Veröffentlichungsnummer: WO 2017/067788

(56) Entgegenhaltungen:
- WO-A1-2011/012489
- DE-A1- 3 843 702
- DE-T2- 60 104 300
- DE-U1-202013 003 918
- FR-A1- 2 992 155

## Beschreibung

Die Erfindung betrifft das Gebiet der Geräte zum Zubereiten von Heiss- und/oder Kaltgetränken. Sie betrifft im Speziellen eine Getränkezubereitungsmaschine zum Zubereiten eines Getränks aus einer Portionskapsel.

Getränkezubereitungsmaschinen mit einem hohem Automatisierungsgrad, wie beispielsweise Kaffeemaschinen, die eine Portionskapsel verwenden und die über diverse zusätzliche Funktionen, wie die Zubereitung von Tee oder das Erzeugen von Milchschaum, verfügen, weisen diverse Bauteile auf, welche vom Benutzer in regelmässigen Abständen geleert, gefüllt und gereinigt werden müssen. Wasserbehälter, Auffangbehälter und Tropfschalen oder auch Milchtanks von integrierten Milchschäumern sind Beispiele solcher Bauteile.

Dass solche Bauteile schubladenartig in ein Gehäuse integriert sein können, welches weitere Bauteile der Getränkezubereitungsmaschine, wie beispielsweise Zuleitungen, Brühmodul, Brühkammer, Netzteil, Steuerung etc, gegen aussen abschirmt, ist an und für sich bekannt.

EP 1 740 078 und EP 2 342 997 zeigen beispielsweise Getränkezubereitungsmaschinen, bei welchen die Tropfschale (auch Restflüssigkeitssammelbehälter oder Restwasserschale genannt) geführt in verschiedene Positionen gebracht werden kann, welche sich in ihrer relativen Lage zum Gehäuse und zu weiteren Bauteilen der Getränkezubereitungsmaschine unterscheiden. In EP 2 342 997 wird der geführte Übergang von einer Position der Tropfschale in eine andere zusätzlich durch einen Verstellmechanismus unterstützt. FR 2 992 155 zeigt auch eine Getränkezubereitungsmaschine.

Raumsparende, kompakte Getränkezubereitungsmaschinen, welche ihre Kompaktheit zu einem guten Teil Bauteilen verdanken, die relativ zueinander bewegbar sind, haben den Nachteil, dass sich die gegenseitigen Kontaktflächen der Bauteile abnutzen, was zu Kratzern und Furchen, aber auch reduzierter Benutzerfreundlichkeit bis hin zu Fehlpositionierungen der Bauteile und dadurch von Sensoren ausgelöste Fehlermeldungen führen. Dies wiederum kommt einer Wertminderung, insbesondere bei qualitativ hochstehenden Getränkezubereitungsmaschinen gleich, und kann einen erhöhten Wartungsaufwand nach sich ziehen.

Diese Nachteile werden noch akuter, wenn die verschiedenen Bauteile nicht nur relativ zueinander bewegbar sind, sondern sich während der Bewegung aufeinander abstützen und wenn das abstützende Bauteil dabei belastet ist, beispielsweise dadurch, dass es mit einer Flüssigkeit oder mit gebrauchten Portionskapseln gefüllt ist.

Hier setzt die vorliegende Erfindung an. Es ist eine sich der Erfindung stellende Aufgabe, eine Getränkezubereitungsmaschine zur Verfügung zu stellen, welche die Nachteile des Standes der Technik überwindet. Es ist insbesondere eine Aufgabe der Erfindung, eine kompakte Getränkezubereitungsmaschine zur Verfügung zu stellen, welche relativ zueinander und relativ zum Gehäuse der Getränkezubereitungsmaschine bewegliche Bauteile aufweist, wobei die Getränkezubereitungsmaschine ein über ihre Lebensdauer hinweg konstant benutzerfreundliches und abnutzungsarmes Bewegen der Bauteile zeigt.

Diese Aufgaben werden gelöst durch die in den Patentansprüchen definierte Getränkezubereitungsmaschine.

Eine Getränkezubereitungsmaschine der erfindungsgemässen Art ist als Getränkezubereitungsmaschine zum Zubereiten eines Getränks, insbesondere eines Heissgetränks wie Kaffee oder Tee, aus einer Portionskapsel ausgebildet. Die Getränkezubereitungsmaschine umfasst eine Brühkammer, einen Getränkeauslass, ein Gehäuse sowie mindestens ein Aufnahmemodul.

Die Portionskapsel ist in die Brühkammer einlegbar und die Brühkammer ist dazu ausgebildet, ein Getränk basierend auf der Portionskapsel und Wasser, welches in die Brühkammer geleitet wird, zu brühen. Das gebrühte Getränk gelangt über den Getränkeauslass in ein Trinkgefäss, welches unter dem Getränkeauslass positioniert ist. Ferner weist eine Getränkezubereitungsmaschine der erfindungsgemässen Art ein Gehäuse auf, welches sich bei einer äusserlichen Betrachtung grob in die Teilbereiche Frontpartie, Seitenpartien, Rückseite, Boden und Oberteil unterteilen lässt. Dabei ist die Frontpartie durch die Lage des Getränkeauslasses gegeben.

Eine Getränkezubereitungsmaschine der erfindungsgemässen Art weist ferner mindestens ein Aufnahmemodul auf, welches dahingehend ausgebildet ist, eine Flüssigkeit oder eine verbrauchte Portionskapsel in sich aufzunehmen. Ferner zeichnet sich das Aufnahmemodul dadurch aus, dass es horizontal aus der Frontpartie der Getränkezubereitungsmaschine herausziehbar und wieder in die Frontpartie hineinschiebbar ist. Dabei wird das Aufnahmemodul beim Herausziehen und Hineinschieben von einer Unterlage getragen, welche durch ein Bauteil der Getränkezubereitungsmaschine gebildet wird. Das heisst, der Benutzer muss beim Herausziehen und Hineinschieben nur eine entlang der Horizontalen gerichtete Kraft aufbringen, während das Gewicht des Aufnahmemoduls und dessen Inhalts von der Unterlage getragen wird.

Für unterschiedliche Aufnahmemodule können unterschiedliche Bauteile der Getränkezubereitungsmaschine die Unterlage bilden. Insbesondere ist es die Oberseite des Bauteils, welches die Unterlage für ein Aufnahmemodul bildet, das zumindest teilweise über dem die Unterlage bildenden Bauteil in der Getränkezubereitungsmaschine angeordnet ist.

Das Aufnahmemodul weist einen Aufnahmemodulkörper und mindestens einen an einer Unterseite des Aufnahmemodulkörpers befestigbaren Gleiter auf, wobei der mindestens eine Gleiter auf der Unterlage einen kleineren Gleitkoeffizienten als die Unterseite des Aufnahmemodulkörpers und eine geringere Härte als die Oberfläche der Unterlage aufweist. Ersteres führt dazu, dass ein unnötiger Kraftaufwand beim Herausziehen und Hineinschieben verhindert wird und bewirkt ein gleichmässiges Gleiten des Aufnahmemoduls ohne Ruckeln. Letzteres verhindert ein Zerkratzen und Abnützen der Unterlage.

Ergänzend kann die Getränkezubereitungsmaschine folgende Merkmale einzeln oder in Kombination aufweisen:
- Der mindestens eine Gleiter ist auf einfache Weise austauschbar, beispielsweise indem dieser an die Unterseite des Aufnahmemoduls anklipsbar ist oder indem er in eine Halterung einbringbar ist, aus welcher er sich auf einfache Weise entfernen lässt.
- Einen Milchschäumer, welcher insbesondere seitlich zum Getränkeauslass positionierbar ist und von einer Abstellfläche getragen wird, welche ein Teil eines der mindestens einen Tropfgitter ist.
- Die Getränkezubereitungsmaschine kann abgesehen von den hervorstehenden Teilen "Getränkeauslass" und "Tropfgitter" eine würfelförmige Form aufweisen.
- Zumindest die im Betrieb sichtbare Oberfläche der Getränkezubereitungsmaschine, insbesondere die Teilbereiche "Frontpartie" und "Seitenpartien", können eine einheitlich lackierte Oberfläche aufweisen.

In einer Ausführungsform weist die Getränkezubereitungsmaschine ferner eine Tropfschale und ein Tropfgitter auf.

Im Falle eines fehlenden Trinkgefässes oder falls das Trinkgefäss falsch positioniert ist, sammelt sich Flüssigkeit, welche aus dem Getränkeauslass tritt, in einer der mindestens einen Tropfschale. Neben dem Getränk selbst, kann es sich dabei auch Flüssigkeit handeln, welche beispielsweise im Zuge einer Reinigung beziehungsweise Spülung aus dem Getränkeauslass tritt. Während der Boden und die Seitenwände der mindestens einen Tropfschale wasserundurchlässig gefertigt sind, umfasst die Oberseite jeder der mindestens einen Tropfschale, d.h. die Seite der Tropfschale, welche gegen den Getränkeauslass hin gerichtet ist, das zu dieser Tropfschale gehörende Tropfgitter. Dieses schliesst die Tropfschale gegen den Getränkeauslass hin flüssigkeitsdurchlässige ab und ist stabil genug, um das Trinkgefäss zu tragen.

In einer Ausführungsform weist die Getränkezubereitungsmaschine ferner einen Auffangbehälter, einen Wasserbehälter sowie ein Tassenpodest auf, wobei mindestens eines dieser drei Bauteile als Aufnahmemodul der vorgängig beschrieben Art ausgebildet ist. Es versteht sich von selbst, dass auch weitere Bauteile der Getränkezubereitungsmaschine, wie beispielsweise ein zum Milchschäumer gehörender Milchbehälter, als Aufnahmemodul ausgebildet sein können.

Falls mehrere Bauteile der Getränkezubereitungsmaschine als Aufnahmemodul ausgebildet sind, ist jedes für sich allein aus der Frontpartie der Getränkezubereitungsmaschine hinauszieh- und hineinschiebbar. Insbesondere kann jedes Aufnahmemodul unabhängig von der Position der anderen Aufnahmemodule bewegbar sein.

Der Auffangbehälter ist gegen die Brühkammer hin offen und dient zur Aufnahme von verbrauchten, aus der Brühkammer ausgeworfenen Portionskapseln. Ergänzend kann der Auffangbehälter unter der Brühkammer angeordnet sein, was ein einfaches Auswerfen der verbrauchten Portionskapsel aus der Brühkammer in den oben offenen Auffangbehälter ermöglicht.

In Ausführungsformen der Getränkezubereitungsmaschine, in welchen der Wasserbehälter in eine, insbesondere würfelförmige, Getränkezubereitungsmaschine hineinschiebbar ist, kann dieser zwei Positionen einnehmen, nämlich eine erste, eingeschobenen Position, welche der Wasserbehälter im Betrieb der Getränkezubereitungsmaschine einnimmt und eine zweite, beispielsweise über die würfelförmige Form der Getränkezubereitungsmaschine hinausragende Position, in welcher der Wasserbehälter eine frei zugängliche Öffnung zum Nachfüllen von Wasser aufweist.

Das Tassenpodest kommt insbesondere dann zum Einsatz, wenn kleinere Trinkgefässe, beispielsweise Espressotassen, verwendet werden und diese näher an den Getränkeauslass gebracht werden sollen. Das Tassenpodest befindet sich insbesondere unterhalb des Getränkeauslasses und es trägt das Trinkgefäss, in welches das in der Brühkammer gebrühte Getränk gefüllt werden soll.

Das Tassenpodest kann ergänzend zu der Tropfschale und dem Tropfgitter, welche bei grösseren Trinkgefässen zum Einsatz kommen, eine Tassenpodest-Tropfschale und ein gegen den Getränkeauslass hin gerichtetes Tassenpodest-Tropfgitter, auf welchem das Trinkgefäss abgestellt werden kann, aufweisen. Dabei kann das Tassenpodest-Tropfgitter als Unterlage für ein Aufnahmemodul ausgebildet sein, beispielsweise im Falle eines als Aufnahmemodul ausgebildeten Auffangbehälters, welcher oberhalb des Tassenpodests angeordnet ist.

Ergänzend verfügen zumindest die in der eingeschobenen Position sichtbaren Oberflächen eines jeden Aufnahmemoduls über eine visuelle Erscheinung, welche sich mit der Erscheinung der restlichen sichtbaren Oberflächen der Frontpartie, der Seitenpartien und des Oberteils decken. Dies führt zu einem einheitlichen Erscheinungsbild der kompletten Oberfläche der Getränkezubereitungsmaschine. Insbesondere können diese sichtbaren Oberflächen aus einem Kunststoff-Material sein und eine metallische Beschichtung aufweisen und/oder komplett durchlackiert sein.

Das einheitliche Erscheinungsbild der Oberfläche der Getränkezubereitungsmaschine kann durch eine Vorrichtung zum Ablesen des Pegelstandes im Wasserbehälter durchbrochen sein. Diese Vorrichtung weist ein in der Mitte der Frontpartie des Wasserbehälters eingearbeitetes Fenster auf, welches sich im Wesentlichen über die gesamte Höhe des Wasserbehälters erstreckt. Ferner weist diese Vorrichtung ein Beleuchtungsmittel auf, welches die Wasseroberfläche beleuchtet und zu einem durch das Fenster wahrnehmbaren, visuellen Effekt führt. Dieser Effekt kann, gegebenenfalls zusammen mit Füllstandsangaben, welche im Bereich des Fensters angeordnet sind, zur Abschätzung des Wasserstandes im Wasserbehälter dienen.

Eine analoge Vorrichtung zum Ablesen des Pegelstandes kann auch in den Milchbehälter integriert sein. Alternativ kann der Milchbehälter auch aus einem durchsichtigen Material bestehen.

Je weiter das Aufnahmemodul aus der Frontpartie der Getränkezubereitungsmaschine herausragt, desto stärker wird es zumindest in seinem vorderen Bereich von der Unterlage getragen, wobei die Unterlage bei vollständig hinein geschobenem Aufnahmemodul freiliegend und deshalb sichtbar ist.

In einer Ausführungsform der Getränkezubereitungsmaschine ist diese bei eingebrachtem Aufnahmemodul freiliegende Unterlage, welche das Aufnahmemodul beim horizontalen Herausziehen aus und dem horizontalen Hineinschieben in die Frontpartie trägt, eines der mindestens einen Tropfgitter der Getränkezubereitungsmaschine.

In einer Ausführungsform der Getränkezubereitungsmaschine ist das mindestens eine Tropfgitter aus einer Legierung gefertigt, insbesondere aus einer zinkreichen Legierung, beispielsweise aus einer Zamac Legierung.

Das Aufnahmemodul steht nur über den mindestens einen Gleiter mit der das Aufnahmemodul tragenden Unterlage in Kontakt. Um die Anforderungen bezüglich Haft- und Gleitkoeffizient sowie Härte zu erfüllen, besteht zumindest die Oberfläche des mindestens einen Gleiters aus einem Polymer, insbesondere aus einem Fluor enthaltenden Polymer.

Zumindest die Oberfläche des mindestens einen Gleiters kann aus Perfluoralkoxy-Polymer (PFA) oder Polytetrafluorethylen (PTFE) bestehen. Beispiele von PFAs, welche bei den Gleitern zum Einsatz gelangen können, sind Teflon® PFA, Dyneon® oder Hyflon®. Beispiele von PTFEs, welche bei den Gleitern zum Einsatz gelangen können, sind Teflon® und Dyneon® PTFE.

Oftmals besteht nicht nur die Oberfläche des mindestens einen Gleiters aus einem der oben genannten Stoffe, sondern der gesamte Gleiter ist daraus gefertigt.

In einer Ausführungsform weist die Getränkezubereitungsmaschine ferner eine Führungsschiene und eine Gegenschiene zu dieser Führungsschiene auf. Die Führungsschiene ist dabei auf der Unterseite des Aufnahmemoduls angebracht. Alternativ können Aufnahmemodul und Führungsschiene aus einem Stück gefertigt sein.

Die Gegenschiene zur Führungsschiene ist fest mit dem Gehäuse der Getränkezubereitungsmaschine verbunden, vorzugsweise innerhalb des Gehäuses und somit nicht sichtbar.

Der mindestens eine Gleiter ist auf der Führungsschiene angebracht und fest mit dieser verbunden. Beispielsweise kann der Gleiter auf die Führungsschiene geklipst, aufgeklebt oder sonst wie fest, aber vorzugsweise wieder reversibel entfernbar, verbunden sein.

Führungsschiene und Gegenschiene sind dazu ausgebildet, dass das Aufnahmemodul während des Herausziehens und Reinschieben seitlich geführt ist.

Ergänzend kann das Aufnahmemodul mehrere Führungsschienen aufweisen, an welchen je ein oder mehrere Gleiter angebracht sind. Dabei müssen die einzelnen Führungsschienen nicht gleich lang sein, sondern sie können unterbrochen oder lokal begrenzt angeordnet sein. Ausführungsformen mit mehreren Führungsschienen (und entsprechend mehreren Gegenschienen) führen zu mehr Stabilität während des Herausziehens und Hineinschiebens des Aufnahmemoduls, so dass ein Verkanten vermieden wird. Zudem ist eine Vielzahl von Führungsschienen auch vorteilhaft in Situationen, in welchen das Aufnahmemodul, beispielsweise während einer Entleerung beziehungsweise Reinigung oder während eines Nachfüllens, ohne weitere Stützungen selbständig stehen muss.

Ergänzend kann die mindestens eine Gegenschiene und/oder die mindestens eine Führungsschiene und/oder die tragende Unterlage dahingehend ausgebildet sein, dass bestimmte Positionen des Aufnahmemoduls, beispielsweise eine Betriebsposition, eine Nachfüllposition und/oder eine Reinigungsposition, definiert sind. Solche Positionen können beispielsweise durch einrastende Elemente und/oder Verdickungen, beziehungsweise Aussparungen definiert werden.

In einer alternativen Ausführungsform der Getränkezubereitungsmaschine kann diese eine oder mehrere Seitenwand und/oder eine oder mehrere Zwischenwand aufweisen.

Eine Seitenwand ist Teil des die Getränkezubereitungsmaschine gegen aussen abschliessenden Gehäuses oder grenzt unmittelbar an dasselbe an, während eine Zwischenwand sich vom Gehäuse beabstandet innerhalb der Getränkezubereitungsmaschine befindet. Die Seiten- und Zwischenwände (nachfolgend Wände genannt) verlaufen insbesondere in vertikaler Richtung.

Pro Aufnahmemodul sind je zwei dieser Wände dahingehend ausgelegt, dass eine seitliche Führung des Aufnahmemoduls stattfindet. Beispielsweise sorgen zwei Seitenwände oder zwei Zwischenwände oder je eine Seiten- und eine Zwischenwand für die seitliche Führung des Aufnahmemoduls. Dabei können unterschiedliche Aufnahmemodule von denselben zwei Wänden geführt werden.

In Ausführungsformen der Getränkezubereitungsmaschine, in welchen Seiten- und/oder Zwischenwände für eine seitliche Führung des Aufnahmemoduls sorgen, kann auf den Einsatz von Führungsschiene und Gegenschiene zur Führungsschiene verzichtet werden. Falls eine Getränkezubereitungsmaschine mehrere Aufnahmemodule aufweist, welche horizontal aus der Frontpartie der Getränkezubereitungsmaschine gezogen und wieder in diese hineingeschoben werden können, kann ein oder mehrere dieser Aufnahmemodule durch ein oder mehrere Führungsschienen und Gegenschienen seitlich geführt werden und ein oder mehrere dieser Aufnahmemodule können durch Seiten- und Zwischenwände seitlich geführt werden.

Die Wände können Bereiche mit horizontal verlaufenden Anteilen aufweisen, welche das Führen des Aufnahmemoduls verbessern. Ergänzend können diese Bereiche modulselektiv sein, d.h. sie verhindern das Hineinschieben eines falschen Aufnahmemoduls.

Ferner können auch die Wände Mittel zur Definition bestimmter Positionen des Aufnahmemoduls in der vorgängig beschriebenen Art und Weise aufweisen.

In einer Ausführungsform der Getränkezubereitungsmaschine weist das Aufnahmemodul einen Griff auf, über welchen das Aufnahmemodul in horizontaler Richtung aus der Frontpartie der Getränkezubereitungsmaschine herausgezogen werden dann. Dieser Griff kann insbesondere als Griffmulde ausgebildet sein, das heisst, der Griff weist keinen Bereich auf, welcher über das Gehäuse der Getränkezubereitungsmaschine hinausragt. Aufnahmemodule, welche nebeneinander oder übereinander angeordnet sind, können auf einander abgestimmte Griffmulden aufweisen.

In einer Ausführungsform der Getränkezubereitungsmaschine sind Gleiter und Unterlage so gewählt, dass der Gleiter auf der Unterlage einen Gleitkoeffizient kleiner 0.4, insbesondere kleiner 0.3 oder kleiner 0.2, sowie einen Haftkoeffizienten kleiner 0.5, insbesondere kleiner 0.4 oder kleiner 0.3 hat.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: Eine Ansicht einer Getränkezubereitungsmaschine, welche mehrere Aufnahmemodule aufweist;
- Fig. 2: Eine Ansicht der Getränkezubereitungsmaschine mit einem herausgezogenem, als Aufnahmemodul ausgelegten Tassenpodest;
- Fig. 3: Eine Ansicht des Tassenpodests;
- Fig. 4: Eine Ansicht der Unterseite des Tassenpodests aufweisend mehrere Gleiter;
- Fig. 5: Eine Detailansicht der beim Tassenpodest verwendeten Gleiter;
- Fig. 6: Eine Ansicht eines als Aufnahmemodul ausgelegten Wasserbehälters;
- Fig. 7: Eine Ansicht der Unterseite des Wasserbehälters aufweisend mehrere Gleiter; und
- Fig. 8: Eine Detailansicht der beim Wasserbehälter verwendeten Gleiter.

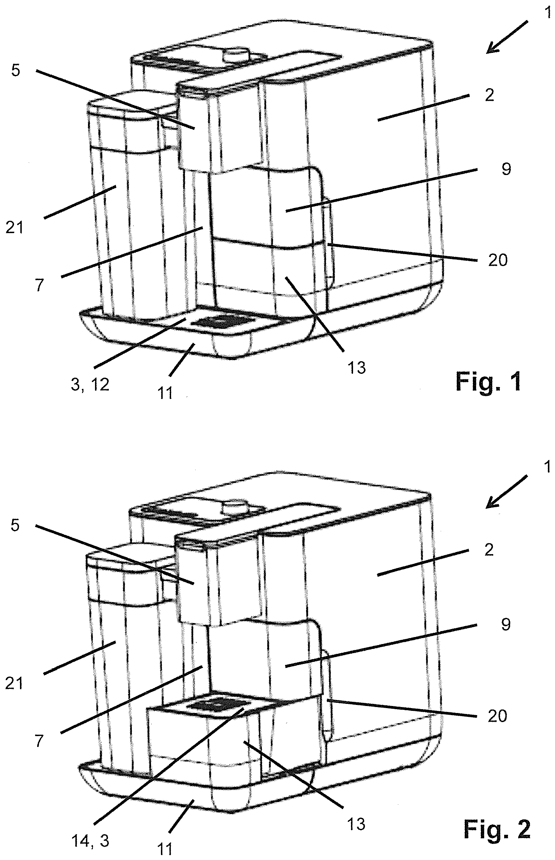

Die Getränkezubereitungsmaschine 1 gemäss **Figur 1** ist beispielsweise eine Portionskapsel-Kaffeemaschine der an sich bekannten Art mit horizontalem Brühmodul. Sie weist neben einem Gehäuse 2 eine Abstellfläche 3, welche in der gezeigten Ausführungsform ein Teilbereich eines Tropfgitters 12 ist, eine Tropfschale 11, einen Getränkeauslass 5 und optional einen Milchschäumer 21 auf. Ferner weist die Getränkezubereitungsmaschine 1 eine Wasserbehälter 7 (in der gezeigten Ausführungsform teilweise durch den Milchschäumer 21 verdeckt), einen Auffangbehälter 9 sowie ein Tassenpodest 13 auf. Aufgrund der Form der Getränkezubereitungsmaschine 1 lässt sich diese grob in die Bereiche Frontpartie, Seitenpartien, Rückseite, Boden und Oberteil unterteilen. Dabei ist die Fontpartie derjenige Bereich der Getränkezubereitungsmaschine 1, welche im Betrieb dem Benutzer zugewandt ist, d.h. sie beinhaltet in der Regel den Getränkeauslass 5.

In der dargestellten Ausführungsform sind der Wasserbehälter 7, der Auffangbehälter 9 sowie das Tassenpodest 13 Aufnahmemodule im vorgängig beschriebenen Sinn. Insbesondere weisen Wasserbehälter 7, Auffangbehälter 9 und Tassenpodest 13 je einen Aufnahmemodulkörper 10 und einen oder mehrere Gleiter 16 auf.

Insbesondere sind der Wasserbehälter 7, der Auffangbehälter 9 sowie das Tassenpodest 13 so in das Gehäuse 2 hineinschiebbar, dass ihre Oberflächenteile, welche bei hineingeschobenem Zustand Teile der Oberfläche der Frontpartie und der Seitenpartien bilden, bündig mit denselben verlaufen. Dadurch weist die Getränkezubereitungsmaschine 1 eine im Wesentlichen würfelförmige Form auf. Nur der Getränkeauslass 1, die Tropfschale 11 mit ihrem obenseitigen Abschluss durch das Tropfgitter 12 sowie der optional angebrachte, einfach entfernbare Milchschäumer 21 durchbrechen die würfelförmige Form der Getränkezubereitungsmaschine 1.

Die Oberfläche der in eingeschobenen Zustand aussenliegenden Bereiche dieser Aufnahmemodule ist gleich veredelt wie die restlichen Bereiche der Frontpartie und der beiden Seitenpartien. Beispielsweise sind all diese Bereiche komplett durchlackiert und/oder aus einem hochwertigen, insbesondere metallischen, Material.

Die bei eingeschobenem Zustand der genannten Aufnahmemodule durchgehende Oberfläche der Getränkezubereitungsmaschine 1 wird nur im Bereich der Seitenpartien, an den Berührungslinien zwischen Aufnahmemodulen und Gehäuse 2 unterbrochen, indem dort Griffmulden 20 eingearbeitet sind. Diese erlauben das gesonderte Herausziehen eines jeden Aufnahmemoduls durch den Benutzer.

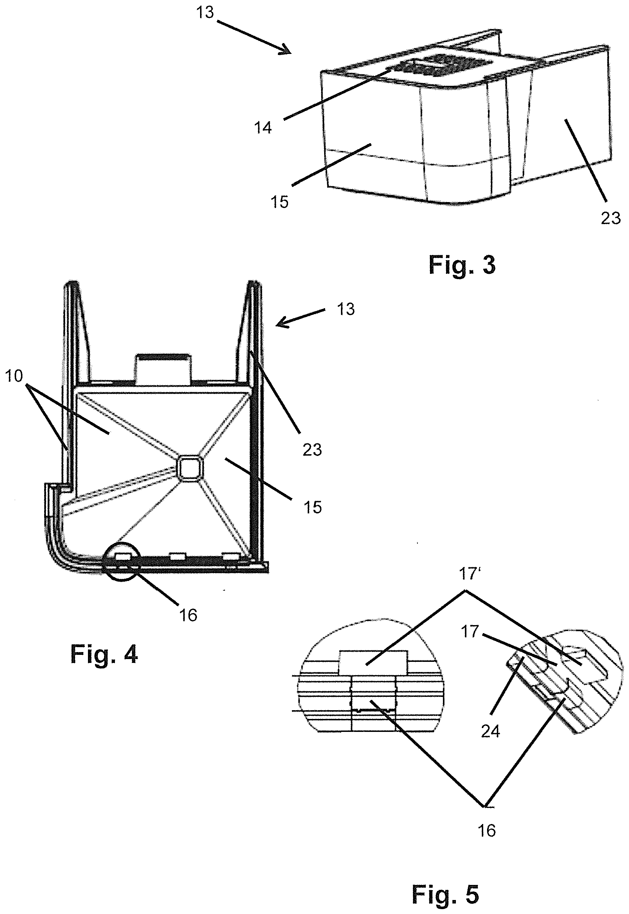

**Figur 2** zeigt die Getränkezubereitungsmaschine 1 gemäss Figur 1, wobei das Tassenpodest 13 so weit herausgezogen ist, wie es für dessen Einsatz im Betrieb notwendig ist. Beim Herausziehen, sowie bei einem späteren Hineinschieben des Tassenpodests 13, gleitet dieses über das Tropfgitter 12. Ohne die in den Figuren 4 und 5 gezeigten Massnahmen würde das zu sichtbaren Abnützungen auf dem Tropfgitter 12 führen.

**Figur 3** zeigt ein komplett aus der Getränkezubereitungsmaschine 1 herausgezogenes Tassenpodest 13. Dieses weist ein Tassenpodest-Tropfgitter 14 sowie eine darunter befindliche Tassenpodest-Tropfschale 15 auf. Maschinenseitig weist das Tassenpodest 13 ferner Fortsätze 23 auf, welche zu einer Fixierung der Position des herausgezogenen Tassenpodests 13 führen.

In **Figur 4** ist die Unterseite des Tassenpodests 13 gemäss Figur 3 gezeigt. Der Aufnahmemodulkörper 10 des Tassenpodests 13 weist an ihrem benutzerseitigen Ende drei Gleiter 16 auf. Jeder dieser Gleiter 16 ist in der gezeigten Ausführungsform 5 mm lang und etwa 2 mm breit. Es versteht sich, dass auch andere Abmessungen, insbesondere im mm- bis cm-Bereich, und insbesondere im Bereich zwischen 1 mm und 5 cm zu einem guten Gleitverhalten und zu einem stabilen Stand des Aufnahmemoduls im Betrieb führen.

In der gezeigten Ausführungsform sind die Gleiter 16 aus Perfluoralkoxy-Polymer (PFA) gefertigt. Beim Herausziehen und Hineinschieben des Tassenpodests 13 wird dieses vom Tropfgitter 12 getragen. Tropfgitter 12 bildet also für das Tassenpodest 13 eine tragende Unterlage im vorhergehend beschriebenen Sinne. Das Tropfgitter 12 kommt beim Herausziehen und Hineinschieben des Tassenpodests 13 ausschliesslich mit den Gleitern 16 in Kontakt.

Das Tropfgitter 12 ist aus einer Zamak-Legierung gefertigt. PFA und Zamak-Legierung führen zu besonders vorteilhaften, d.h. niedrigen, Haft- und Gleitkoeffizienten. Ferner ist die Härte der Zamak-Legierung höher als diejenige von PFA, wodurch ein Zerkratzen des Tropfgitters verhindert wird.

**Figur 5** ist eine Detailansicht eines Gleiters 16 gemäss Figur 4. Dieser ist in eine Halterung 17 eingebracht, welche seinerseits auf einen Träger 24 aufgeklipst ist, welcher fest mit dem Tassenpodest 13 verbunden ist. Die Halterung 17 weist ferner einen Stopp 17' auf, welcher verhindert, dass der Gleiter 16 aus seiner zum Gleiten auf dem Tropfgitter 12 benötigten Position gebracht wird.

Träger 24, Halterung 17 und Gleiter 16 sind so unterhalb des Tassenpodests 13 angeordnet, dass insbesondere bei hineingeschobenem Tassenpodest 13 nur ein kleiner, d.h. kaum sichtbarer, Spalt zwischen Tassenpodest 13 und Tropfschale 11 beziehungsweise Tropfgitter 12 entsteht.

Es versteht sich von selbst, dass auch andere Teile der Getränkezubereitungsmaschine 1, insbesondere der Auffangbehälter 9, analog realisiert werden können. Im Falle des Auffangbehälters 9 gleitet dieser über das Tassenpodest-Tropfgitter 14.

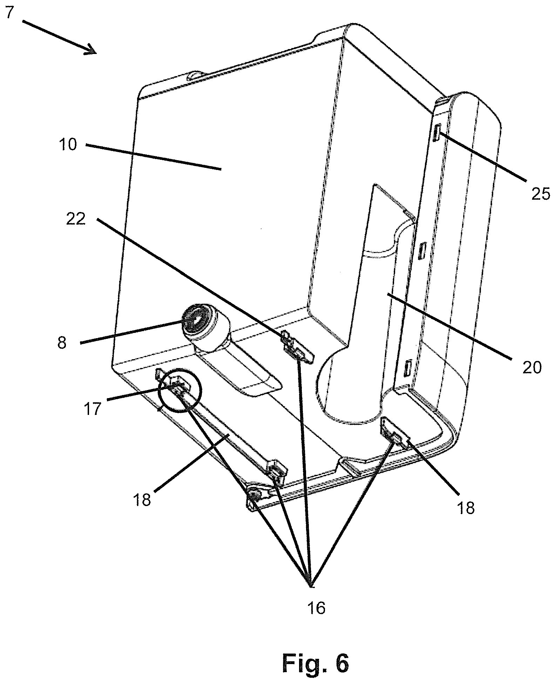

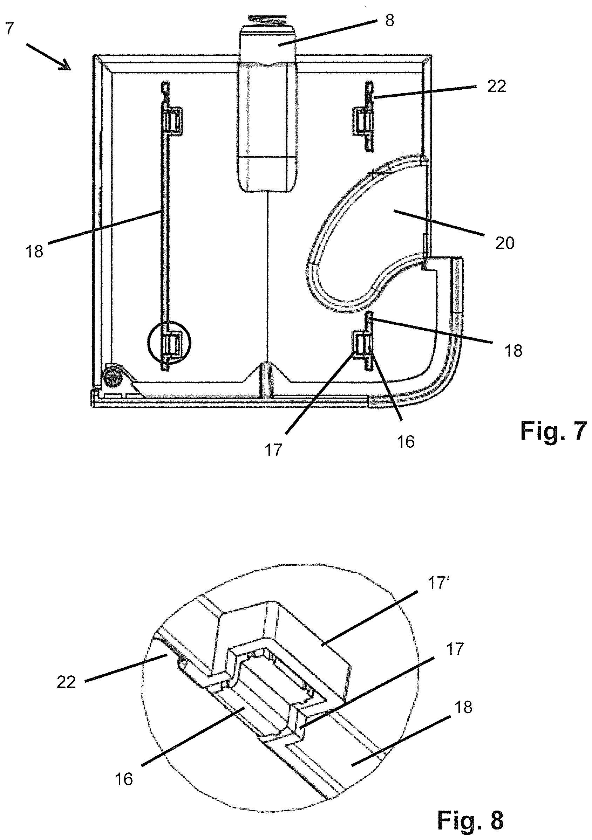

In den **Figuren 6** **und** **7** ist der demontierte, als Aufnahmemodul ausgelegte Wasserbehälter 7 der Getränkezubereitungsmaschine 1 gemäss Figur 1 dargestellt. **Figur 6** zeigt die Rückseite, den Boden sowie die Seite, welche mit der Seitenpartie des Gehäuses 2 der Getränkezubereitungsmaschine 1 zusammenfällt. **Figur 7** zeigt nur den Boden des Wasserbehälters 7.

Der gezeigte Wasserbehälter 7 weist einen Wasserauslass 8 auf, welcher beim Hineinschieben des Wasserbehälters 7 in ein maschinenseitiges Gegenstück greift. Um die dazu benötigte Positionsgenauigkeit zu erreichen, aber auch damit ein komplett oder teilweise aus dem Gehäuse 2 herausgezogener Wasserbehälter 7 einen sicheren Stand hat, weist der Aufnahmemodulkörper 10 des Wasserbehälters 7 auf seiner Unterseite vier Gleiter 16 auf. Diese sind unter Verwendung von Halterungen 17 auf Führungsschienen 18 angebracht, wobei die, gegen die Seitenpartie des Gehäuses 2 hin gelegene Führungsschiene 18 durch die Griffmulde 20 unterbrochen ist.

Maschinenseitig angebrachte Gegenschienen (nicht gezeigt) zu den Führungsschienen garantieren die benötigte seitliche Führung des Wasserbehälters 7. Vorzugsweise befinden sich diese Gegenschienen nur auf dem Boden des Hohlraums in der Getränkezubereitungsmaschine 1, der zur Aufnahme des Wasserbehälters bestimmt ist, und sind somit bei eingeschobenem Wasserbehälter 7 nicht sichtbar.

Positionierungsaussparungen 22 sorgen in Kombination mit entsprechenden Gegenstücken auf den Gegenschienen dafür, dass der Wasserbehälter 7 wohl definierte und stabile Positionen für den Betrieb, beziehungsweise zum Nachfüllen einnimmt. Ferner führt das Einrasten der Gegenstücke in die Positionierungsaussparungen 22 zu einem hörbaren Klicken und damit zu einem Signal an den Benutzer, welches diesem zu erkennen gibt, dass der Wasserbehälter 7 eine korrekte Position einnimmt.

Die Griffmulde 20 ist so dimensioniert, dass die Finger des Benutzers gut in derselben Platz haben.

Ferner weist der Wasserbehälter 7 an einer Fläche, welche den Abschluss desjenigen Bereiches der Oberfläche des Wasserbehälters 7 bildet, welcher wie die Front- und Seitenflächen der Getränkezubereitungsmaschine 1 veredelt ist, Mittel 25 auf, um den gegebenenfalls schweren, da vollen, Wasserbehälter weiter zu stabilisieren. Ferner dienen diese Mittel 25 dazu, dem Benutzer einen akustischen und/oder visuellen Eindruck zu geben, ob der Wasserbehälter richtig eingesetzt wurde. In der gezeigten Ausführungsform weisen diese Mittel 25 Einrastvertiefungen auf, in welche entsprechende, gehäuseseitig angebrachte Elemente einrasten.

Letztlich zeigt **Figur 8** die auf der Unterseite des Wasserbehälters gemäss Figuren 6 und 7 angebrachten Gleiter 16. Jeder Gleiter 16 wird von der Halterung 17 in Position gehalten. In der gezeigten Ausführungsform ist der Gleiter 16 in die Halterung 17 hineingeklipst oder in die Halterung 17 hineingeklebt.

Die Halterung 17 ist mit der Führungsschiene 18 fest verbunden und weist einen Stopp 17' auf, welcher bündig zum Boden des Wasserbehälters 7 verläuft. Dieser verhindert ein Abdrehen der Halterung und damit, dass der Wasserbehälter 7 nicht oder nicht ausschliesslich auf den Gleitern 16 gleitet.

In der gezeigten Ausführungsform weisen die Gleiter 16 eine Länge von 5 mm und eine totale Breite von 4 mm auf, wobei die effektive Laufbreite etwa 2 mm ist. Es versteht sich von selbst, dass andere Abmasse, insbesondere Längen im Bereich zwischen 5 mm und 5 cm ebenfalls gute Resultate erzielen.

Die Gleiter 16 sind wiederum aus PFA gefertigt.

In einer Anordnung des Wasserbehälters 7 wie in Figur 1 gezeigt, gleitet derselbe beim Herausziehen und Reinschieben über einen nicht strukturierten Teilbereich des bereits zuvor beschriebenen Tropfgitters 12. Es gelten auch hier die bei der Beschreibung von Figur 4 gemachten Aussagen bezüglich Haft- und Gleitkoeffizient sowie Zerkratzen des Tropfgitters.

Die seitliche Führung der Bewegung der in den Figuren 1-8 gezeigten Aufnahmemodule kann maschinenseitig auf zwei Arten geschehen: zum einen über die oben erwähnten Gegenschienen, welche am Gehäuse 2 befestigt sind, und zum andern über eine vertikale Zwischenwand, welche im Innenraum des Gehäuses 2 angebracht ist.

Im Falle des Auffangbehälters 9 und des Tassenpodests 13 übernimmt ein vertikale Zwischenwand (nicht gezeigt), welche zwischen Wasserbehälter 7 und den beiden genannten Aufnahmemodulen verläuft, zusammen mit der diesen beiden Aufnahmemodulen naheliegenden Seitenwand des Gehäuses 2 die seitliche Führung der beiden Aufnahmemodule.

Ferner weist der Innenraum des Gehäuses 2 eine horizontale Zwischenwand auf (nicht gezeigt), welche sich zwischen Auffangbehälter 9 und Tassenpodest 13 befindet. Diese bildet die tragende Unterlage für diejenigen Bereiche des Auffangbehälters 9, welche sich innerhalb des Gehäuses 2 befinden. Im Falle eines vollständig hineingeschobenen Auffangbehälters 9 wird dieser folglich vollständig von der horizontalen Zwischenwand getragen und ruht nicht auf dem Tassenpodest-Tropfgitter 14.

## Patentansprüche

1. Getränkezubereitungsmaschine (1) zum Zubereiten eines Getränks aus einer Portionskapsel, aufweisend
- eine Brühkammer zum Einlegen der Portionskapsel,
- einen Getränkeauslass (5), aus welchem das in der Brühkammer gebrühte Getränk in ein darunter abgestelltes Trinkgefäss gelangt,
- ein Gehäuse (2), aufweisend eine Frontpartie (10), welche durch die Lage des Getränkeauslasses (5) gegeben ist, sowie
- ein Aufnahmemodul (13) zur Aufnahme einer Flüssigkeit oder einer verbrauchten Portionskapsel, wobei das Aufnahmemodul horizontal aus der Frontpartie der Getränkezubereitungsmaschine (1) herausziehbar und wieder in diese hineinschiebbar ist, wobei ein Bauteil der Getränkezubereitungsmaschine (1) eine Unterlage bildet und das Aufnahmemodul beim Herausziehen und Hineinschieben von der Unterlage getragen wird.
**dadurch gekennzeichnet, dass** das Aufnahmemodul (13) einen Aufnahmemodulkörper (10) und mindestens einen an einer Unterseite des Aufnahmemodulkörpers (10) befestigbaren Gleiter (16) aufweist, welcher auf der Unterlage einen kleineren Gleitkoeffizienten als die Unterseite des Aufnahmemodulkörpers (10) und eine geringere Härte als die Oberfläche der Unterlage aufweist.

2. Getränkezubereitungsmaschine (1) nach Anspruch 1, aufweisend mindestens eine Tropfschale (11), in welcher sich Flüssigkeit sammelt, welche bei fehlendem oder falsch positioniertem Trinkgefäss aus dem Getränkeauslass (5) tritt, und mindestens ein Tropfgitter (12), welches die Tropfschale (11) gegen den Getränkeauslass (5) hin flüssigkeitsdurchlässig abschliesst, und auf welchem das Trinkgefäss abgestellt werden kann, wobei das Tropfgitter die Unterlage bildet.

3. Getränkezubereitungsmaschine (1) nach einem der vorhergehenden Ansprüche, ferner aufweisend
- einen gegen die Brühkammer hin offenen Auffangbehälter (9), der zur Aufnahme von verbrauchten, aus der Brühkammer ausgeworfenen Portionskapseln ausgebildet ist,
- einen Wasserbehälter (7), sowie
- ein Tassenpodest (13) aufweisend eine Tassenpodest-Tropfschale (15) und ein Tassenpodest-Tropfgitter (14), wobei das Tassenpodest-Tropfgitter (14) dahingehend ausgelegt ist, die Unterlage zu bilden,
wobei mindestens eines der Bauteile Auffangbehälter (9), Wasserbehälter (7) und Tassenpodest (13) als Aufnahmemodul ausgebildet ist.

4. Getränkezubereitungsmaschine (1) nach Anspruch 2 oder 3, wobei das mindestens eine Tropfgitter (12,14) aus einer Legierung, insbesondere aus einer zinkhaltigen Legierung, gefertigt ist.

5. Getränkezubereitungsmaschine (1) nach einem der vorhergehenden Ansprüche, wobei zumindest die Oberfläche des mindestens einen Gleiters (16) aus einem Fluor enthaltenden Polymer besteht.

6. Getränkezubereitungsmaschine (1) nach Anspruch 5, wobei zumindest die Oberfläche des mindestens einen Gleiters (16) aus Perfluoralkoxy-Polymer (PFA) oder Polytetrafluorethylen (PTFE) besteht.

7. Getränkezubereitungsmaschine (1) nach einem der vorhergehenden Ansprüche, ferner aufweisend eine Führungsschiene (18) und eine Gegenschiene (19) zur Führungsschiene (18), wobei die Führungsschiene (18) auf der Unterseite des Aufnahmemoduls und der mindestens eine Gleiter (16) auf der Führungsschiene (18) angebracht ist und die Gegenschiene (19) fest mit dem Gehäuse (2) der Getränkezubereitungsmaschine (1) verbunden ist, und wobei das Aufnahmemodul aufgrund von Führungsschiene (18) und Gegenschiene (19) seitlich geführt bewegbar ist.

8. Getränkezubereitungsmaschine (1) nach einem der vorhergehenden Ansprüche, ferner aufweisend eine oder mehrere Seitenwand und/oder eine oder mehrere Zwischenwand, wobei das Aufnahmemodul zwischen zwei Seitenwänden oder zwischen zwei Zwischenwänden oder zwischen einer Seitenwand und einer Zwischenwand seitlich geführt bewegbar ist.

9. Getränkezubereitungsmaschine (1) nach einem der vorhergehenden Ansprüche, wobei das Aufnahmemodul über eine Griff (20) verfügt, über welchen eine horizontale Kraft auf das Aufnahmemodul ausgeübt werden kann.

10. Getränkezubreitungsmaschine nach einem der vorhergehenden Ansprüche, wobei der mindestens eine Gleiter auf der Unterlage einen Gleitkoeffizienten kleiner 0.4 und einen Haftkoeffizienten kleiner 0.5 besitzt.

## Claims

1. A drinks preparation machine (1) for preparing a drink from a portion capsule, comprising
- a brewing chamber for inserting the portion capsule,
- a drinks outlet (5), from which the drink which is brewed in the brewing chamber gets into a drinks vessel which is placed therebelow,
- a housing (2) comprising a front portion (10) which is given by the position of the drinks outlet (5), as well as
- a receiving module (13) for receiving a fluid or a spent portion capsule, wherein the receiving module can be pulled out of the front portion of the drinks preparation machine (1) and pushed into this again, in a horizontal manner, wherein a component of the drinks preparation machine (1) forms an underlay and the receiving module is carried by the underlay on pulling out and pushing in,
**characterised in that** the receiving module (13) comprises a receiving module body (10) and at least one slider (16), which is fastenable to a lower side of the receiving module body (10) and which on the underlay has a smaller coefficient of kinetic friction than the lower side of the receiving module body (10) and a lower hardness than the surface of the underlay.

2. A drinks preparation machine (1) according to claim 1, comprising at least one drip tray (11), in which fluid collects, said fluid exiting from the drinks outlet (5) in the case of an absent or incorrectly positioned drinks vessel, and at least one drip grate (12) which terminates the drip tray (11) towards the drinks outlet (5) in a fluid permeable manner and on which the drinks vessel can be placed, wherein the drip grate forms the underlay.

3. A drinks preparation machine (1) according to one of the preceding claims, further comprising
- a capture container (9) which is open towards the brewing chamber and which is designed for receiving spent portion capsules which are ejected out of the brewing chamber,
- a water container (7), as well as
- a cup stand (13) comprising a cup stand drip tray (15) and a cup stand drip grate (14), wherein the cup stand drip grate (14) is designed so as to form the underlay,
wherein at least one of the components capture container (9), water container (7) and cup stand (13) is designed as a receiving module.

4. A drinks preparation machine (1) according to claim 2 or 3, wherein the at least one drip grate (12, 14) is manufactured of an alloy, in particular of a zinc-containing alloy.

5. A drinks preparation machine (1) according to one of the preceding claims, wherein at least the surface of the at least one slider (16) consists of a polymer which contains fluorine.

6. A drinks preparation machine (1) according to claim 5, wherein at least the surface of the at least one slider (16) consists of a perfluoroalkoxy polymer (PFA) or polytetrafluorethylene (PTFE).

7. A drinks preparation machine (1) according to one of the preceding claims, further comprising a guide rail (18) and a counter-rail (19) to the guide rail (18), wherein the guide rail (18) is attached to the lower side of the receiving module and the at least one slider (16) to the guide rail (18), and the counter-rail (19) is fixedly connected to the housing (2) of the drinks preparation machine (1) and wherein the receiving module is movable in a laterally guided manner on account of the guide rail (18) and counter-rail (19).

8. A drinks preparation machine (1) according to one of the preceding claims, further comprising one or more side walls and/or one or more intermediate walls, wherein the receiving module is movable in a laterally guided manner between two side walls or between two intermediate walls or between a side wall and an intermediate wall.

9. A drinks preparation machine (1) according to one of the preceding claims, wherein the receiving module has a grip (20), via which a horizontal force can be exerted onto the receiving module.

10. A drinks preparation machine according to one of the preceding claims, wherein the at least one slider on the underlay has a coefficient of kinetic friction of smaller than 0.4 and a coefficient of static friction of smaller than 0.5.

## Revendications

1. Machine (1) de préparation de boisson servant à préparer une boisson à partir d'une capsule de portion, la machine présentant :
- une chambre d'infusion dans laquelle la capsule de portion peut être placée,
- une sortie (5) de boisson par laquelle la boisson infusée dans la chambre d'infusion se rend dans un récipient à boisson placé par-dessous,
- un boîtier (2) présentant une partie frontale (10) définie par la position de la sortie (5) de boisson et
- un module de réception (13) qui peut reprendre un liquide ou une capsule de portion usagée, le module de réception pouvant être extrait de la partie frontale de la machine (1) de préparation de boisson ou inséré dans cette dernière horizontalement, un composant de la machine (1) de préparation de boisson formant un support et le module de réception étant porté par le support lors de l'extraction ou de l'insertion, **caractérisé en ce que**
le module de réception (13) présente un corps (10) de module de réception et au moins un coulisseau (16) apte à être fixé sur le côté inférieur du corps (10) de module de réception et présentant sur le support un coefficient de frottement plus petit que sur le côté inférieur du corps (10) de module de réception, ainsi qu'une dureté inférieure à celle de la surface du support.

2. Machine (1) de préparation de boisson selon la revendication 1, présentant au moins une coquille d'égouttage (11) dans laquelle se rassemble le liquide qui sort de la sortie (5) de boisson lorsque le récipient à boisson est absent ou mal positionné, et au moins une grille d'égouttage (12) qui ferme la coquille d'égouttage (11) de manière perméable aux liquides en direction de la sortie (5) de boisson et sur laquelle le récipient à boisson peut être posé, la grille d'égouttage formant le support.

3. Machine (1) de préparation de boisson selon l'une des revendications précédentes, présentant en outre :
- un récipient de reprise (9) s'ouvrant sur la chambre d'infusion et configuré pour reprendre les capsules de portion usagées expulsées hors de la chambre d'infusion,
- un réservoir (7) à eau et
- une plateforme (13) à tasse dotée d'une coquille d'égouttage (15) de plateforme à tasse et d'une grille d'égouttage (14) de plateforme à tasse, la grille d'égouttage (14) étant conçue pour former le support,
au moins l'un des composants récipient de reprise (9), réservoir (7) à eau et plateforme (13) à tasse étant configuré comme module de réception.

4. Machine (1) de préparation de boisson selon les revendications 2 ou 3, dans laquelle le ou les grilles d'égouttage (12, 14) sont réalisés en alliage, notamment un alliage contenant du zinc.

5. Machine (1) de préparation de boisson selon l'une des revendications précédentes, dans laquelle au moins la surface du ou des coulisseaux (16) est formée d'un polymère fluoré.

6. Machine (1) de préparation de boisson selon la revendication 5, dans laquelle au moins la surface du ou des coulisseaux (16) est formée d'un polymère perfluoroalcoxylé (PFA) ou de polytétrafluoroéthylène (PTFE) .

7. Machine (1) de préparation de boisson selon l'une des revendications précédentes, présentant en outre un rail de guidage (18) et un rail (19) complémentaire du rail de guidage (18), le rail de guidage (18) étant placé sur le côté inférieur du module de réception et le ou les coulisseaux (16) sur le rail de guidage (18), le rail complémentaire (19) étant relié solidairement au boîtier (2) de la machine (1) de préparation de boisson, le module de réception pouvant être déplacé avec guidage latéral grâce au rail de guidage (18) et au rail complémentaire (19).

8. Machine (1) de préparation de boisson selon l'une des revendications précédentes, présentant en outre une ou plusieurs parois latérales et/ou une ou plusieurs parois intermédiaires, le module de réception pouvant être déplacé avec guidage latéral entre deux parois latérales, entre deux parois intermédiaires ou entre une paroi latérale et une paroi intermédiaire.

9. Machine (1) de préparation de boisson selon l'une des revendications précédentes, dans laquelle le module de réception dispose d'une poignée (20) qui permet d'appliquer une force horizontale sur le module de réception.

10. Machine (1) de préparation de boisson selon l'une des revendications précédentes, dans laquelle la ou les coulisseaux présentent sur le support un coefficient de frottement inférieur à 0,4 et un coefficient d'adhérence inférieur à 0,5.
